# EUROPEAN PATENT APPLICATION

(11) **EP 2 444 664 A1**
(43) Date of publication of application: **25.04.2012**
(21) Application number: 10789034.5
(22) Date of filing: 18.06.2010
(51) Int. Cl.: F03G 6/06, F24J 2/07, E04H 5/12, F28C 1/00

(54) **TOWER FOR SOLAR CONCENTRATION PLANT WITH NATURAL DRAUGHT COOLING**

(30) Priority: 19.06.2009 ES 200901460
(71) Applicant: Abengoa Solar New Technologies, S.A., 41018 Sevilla (ES)
(72) Inventor: OLAVARRIA RODRIGUEZ-ARANGO, Rafael, E-41018-Sevilla (ES); GARCIA RAMIREZ, Elena, E-41018-Sevilla (ES); BARRAGAN JIMENEZ, José, E-41018-Sevilla (ES)
(74) Representative: Garcia-Cabrerizo y del Santo, Pedro Maria
(86) International application number: PCT/ES2010/000269
(87) International publication number: WO 2010/146201

(57) **Abstract**

Solar concentration plant placed on tower technology wherein the tower is used not only to equate the receiver devices at great height but also as a natural-draft cooling system. The tower is hollow and has a hyperboloid structure that may exceed 200 m in height, accommodating devices for receiving saturated or superheated steam in cavities with different orientations. There is a dynamic control for adapting the heliostat field so that the heliostats can be focussed on different focal points for producing electricity, producing process heat, producing solar fuels or for application to thermochemical processes.

## Description

### TECHNICAL FIELD OF THE INVENTION

The present invention relates to solar concentration plants placed on tower technology having a natural-draught system and physically separated from the evaporator and superheater, as well as dynamic control for adapting the heliostat field for producing electricity, producing process heat, producing solar fuels or for application to thermochemical processes.

### BACKGROUND OF THE INVENTION

Within high solar concentration plants we can distinguish Stirling disks, parabolic trough collectors and the technology discussed herein, central receiver technology.

Central receiver systems consist of a heliostat field, made up of mirrors with a large surface area (40-125 m2 per unit) called sun-tracking heliostats, which reflect the direct solar radiation incident upon one or several central receiver devices located on the highest part of a very high tower. These receiver devices are usually found accommodated in cavities "excavated" in the tower itself.

Concentrated solar radiation heats a fluid inside the receiver, the thermal energy of which can subsequently be used to generate electricity.

At present, water/steam technology is that most frequently used in central receiver systems, using both saturated and superheated steam as a heat-transfer fluid.

In order to reduce electricity consumption in conventional thermal plants, so-called natural-draught cooling or hyperbolic cooling is used.

The air flow through the natural-draught tower is mainly due to the difference in density between the cold inflowing air and warm outflowing air, thereby eliminating the need for mechanical fans. These towers have low maintenance costs and are highly recommended for cooling large amounts of water.

Natural-draught towers must be high and must also have a large cross section in order to facilitate the flow of ascendant air.

### DESCRIPTION OF THE INVENTION

The invention being discussed is that of a solar tower used as a natural-draught cooling tower in a high concentration thermoelectric solar plant, where the concentrator element is a field of heliostats that concentrate solar radiation on several receiver devices installed on the highest part of said tower.

The steam originating in said receiver devices is pumped towards a turbine for producing electricity.

In order to facilitate this natural-draught effect, the tower of the invention also has a hyperbolic and hollow structural design, in such a manner as to enable an ascendant air current for cooling the steam by natural convection to travel up therethrough.

Using the solar tower as a cooling tower, it has a dual function: that of accommodating the receiver devices at the necessary height for concentrating the radiation and use as a cooling tower.

The tower of our heliostat field has the necessary height to concentrate the solar energy reflected by the heliostat field onto a focus or focal point located on the highest part thereof, thereby minimising cosine effect losses (angle formed between the incident ray and the normal to the heliostat, completely shadowing the sun). We are referring to tower heights in excess of 100 m, said height being sufficient to facilitate use of the tower for this natural-draught cooling effect.

This natural circulation is also aided by the existence of a hot focal point such as the receiver devices on the highest part of the tower.

The hollow design of the tower for use as a natural-draught tower obliges us to devise another way of accommodating the receivers so that these do not interrupt the outward flow of air, as in the towers of the state of the art the receiver devices are disposed within inner cavities, which significantly hampers outflow of air.

To this end, the use of balconies or overhangs that include the different cavities or receiver devices has been devised in such a manner that the equipment does not interrupt the natural-draught effect achieved using a completely hollow tower.

These receiver devices can be saturated and superheated steam receiver devices or receiver devices of any other heat-transfer fluid, disposed independently on the different balconies or overhangs and including a tank by way of connection therebetween in the case of water/steam receiver devices. The tower could also be designed in such a manner as to accommodate several receiver devices in the same cavity.

In order for the plant to produce high outputs (approximately 50 MWe) of commercial interest, the heliostat field required for this type of high-output plant tends towards field configurations having a large number of heliostats.

Therefore, the tower proposed herein would have three or four focal points with different orientations, depending on the number of cavities chosen.

### DESCRIPTION OF THE DRAWINGS

In order to complete the description being made and with the object of helping to better understand the invention, it is accompanied by a set of drawings wherein, in an illustrative and non-limiting manner, the following have been represented:
Figure 1 shows a general schematic view of a solar concentration plant with a tower-type central receiver
Figure 2 shows an elevational view of the tower

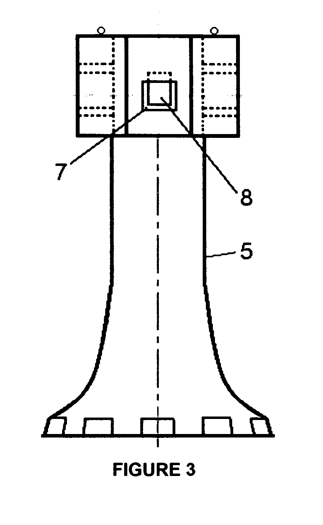

Figure 3 shows a rear elevational view of the tower

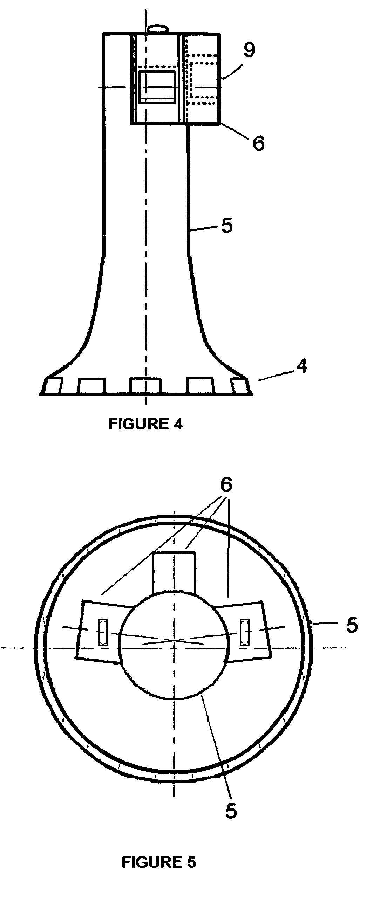

Figure 4 shows a side elevational view of the tower
Figure 5 shows a top plan view of the tower
The references used in the figures correspond to:
(1) Tower
(2) Heliostats
(3) Solar radiation
(4) Tower base
(5) Tower hyperboloid structure
(6) Overhangs or balconies
(7) Receiver devices
(8) Cavity
(9) Cavity
(10) Cavity

### PREFERRED EMBODIMENT OF THE INVENTION

In order to better understand the invention, a description of the tower design and geometry is provided below.

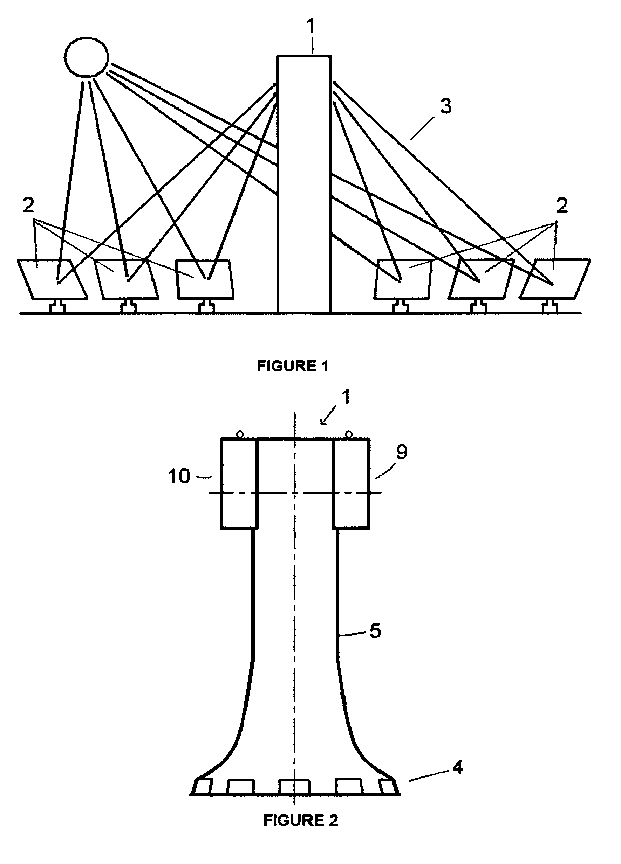

Figure 1 shows the usual configuration of a solar concentration plant having a central receiver in the form of a tower. It is composed of the tower (1) which accommodates, on the highest part thereof, the receiver devices (3) whereonto the solar radiation is reflected by the heliostats (2), which are subject to different focussing strategies in order to achieve the required thermal output and concentration in each receiver device.
Figure 2 shows a detailed view of the tower (1) geometry. The tower (1) has a hollow circular base (4) with a diameter of approximately 50 m. The tower has a hyperboloid structural design (5) that may exceed 200 m in height, taking into account that these dimensions may vary according to the concentration plant's requirements.

Three or four rectangular overhangs (6) or balconies, depending on the distribution of the heliostats (2), are deployed on the highest part of the tower. The dimensions of said overhangs (6) are 24 m wide by 50 m high, although said dimensions may vary in accordance with design requirements.

Each of the overhangs (6) contains a cavity (8, 9, 10) with an outer opening approximately 20 m wide by 17 m high that accommodates a solar receiver device.

The receiver devices (7) can be saturated or superheated steam receivers and are installed independently on the different balconies or overhangs (6), including a tank by way of connection therebetween.

The construction material of the tower (1) can be concrete, metal or an equivalent material, except for the areas adjacent to the outer openings of the cavities (8, 9, 10), which will be protected by insulating plates in order to protect the concrete from the solar radiation.

The interior of the cavity that is not occupied by the solar receiver device (7) will also be protected by this insulating material.

In relation to the heliostat field (2), these types of high-output plants require field configurations with a large number of heliostats (2) and different orientations. Therefore, the tower (1) of the proposed thermoelectric solar plant would have three or four focal points with different orientations, depending on the chosen number of cavities.

Additionally, in order to manage the steam produced and ensure availability thereof in the absence of daylight hours, the plant includes a storage system based on either water/steam tanks or molten salts.

As explained earlier, the choice of this tower design is basically due to the possibility of reducing the internal electricity consumption and water consumption of a thermosolar power generation plant using one of the existing construction elements: the tower. The tower thus becomes a dual-function element: it raises the solar receiver devices and enables an air-based natural cooling system. This cooling system substitutes conventional water-based cooling towers, thus reducing in-plant electricity consumption and water consumption.

## Claims

1. Tower for a solar concentration plant with natural-draught cooling, **characterised in that** it comprises a tower (1) with a hollow circular base (4) and hyperboloid structure (5) with sufficient height to minimise the cosine effect and having several rectangular balconies or overhangs (6) with different orientations; each of said balconies or overhangs (6) contains a cavity (8, 9, 10) with an outer opening accommodating one or several solar receiver devices (7).

2. Tower for a solar concentration plant with natural-draught cooling, according to claim 1, **characterised in that** the construction material of the tower (1) is concrete, metal or an equivalent material, except for the areas adjacent to the outer openings of the cavities (8, 9, 10) that will be protected by insulating plates, as in the case of the inner areas of the cavities (8, 9, 10) which are not occupied by the solar receiver device (7).

3. Tower for a solar concentration plant with natural-draught cooling, according to claim 1, **characterised in that** the receiver devices (7) can be saturated or superheated receivers and are installed independently on the different balconies or overhangs (6), including a tank by way of connection therebetween.

4. Tower for a solar concentration plant with natural-draught cooling, according to claim 1, **characterised in that** the tower exceeds 100 m in height.

5. Tower for a solar concentration plant with natural-draught cooling, according to claim 1, **characterised in that** the hollow circular base (4) has a diameter of approximately 50 m, the tower exceeds 200 m in height, the dimensions of the overhangs (6) are approximately 24 m wide by 50 m high and the cavities (8, 9, 10) have an outer opening approximately 20 m wide by 17 m high which accommodates a solar receiver device.
